# EUROPEAN PATENT APPLICATION

(11) **EP 4 579 315 A1**
(43) Date of publication of application: **02.07.2025**
(21) Application number: 24204401.4
(22) Date of filing: 02.10.2024
(51) Int. Cl.: G02B 27/42, G03B 21/20, G01B 11/25

(54) **PATTERN PROJECTOR**

(30) Priority: 28.12.2023 US 202318398169
(71) Applicant: Himax Technologies Limited, Tainan City 74148 (TW)
(72) Inventor: HSIAO, Ming-Shu, 74148 Tainan City (TW); TSAI, Meng-Ko, 74148 Tainan City (TW)
(74) Representative: Schmidbauer, Andreas Konrad

(57) **Abstract**

A pattern projector including a laser source, a metasurface, and a light sensor is provided. The laser source is configured to emit a laser beam. The metasurface is disposed on a path of the laser beam and configured to diffract the laser beam onto a projected surface, so as to form a pattern on the projected surface. The light sensor is disposed beside the metasurface and configured to sense the pattern.

## Description

### BACKGROUND

### Technical Field

The invention generally relates to an optical device and in particular, to a pattern projector.

### Description of Related Art

Along with the progress of optical technology, structured light sensing technology or time-of-flight (ToF) sensing technology have been created. Generally speaking, a camera can capture a plane image, but cannot obtain a distance, i.e. a depth, from the camera to an object to be photographed. However, structured light sensing technology or ToF sensing technology is capable of obtain depth data.

For a structured light sensor or a ToF sensor, a light pattern projected onto a detected object may be needed, and the light pattern may be a dot pattern or a line pattern. A conventional structured light sensor or a conventional ToF sensor may use a diffractive optical element (DOE) to form the dot pattern and the line pattern. However, the surface of a DOE has a plurality of orders with different height, and the DOE combined with a lens has a large thickness, which cause the structured light sensor or the ToF sensor to be thick.

### SUMMARY

Accordingly, the invention is directed to a pattern projector, which has a thinner structure.

An embodiment of the invention provides a pattern projector including a laser source, a metasurface, and a light sensor. The laser source is configured to emit a laser beam. The metasurface is disposed on a path of the laser beam and configured to diffract the laser beam onto a projected surface, so as to form a pattern on the projected surface. The light sensor is disposed beside the metasurface and configured to sense the pattern.

In the pattern projector according to the embodiment of the invention, a metasurface is disposed to form a pattern on a projected surface. Compared with a DOE combined with a lens having a thicker structure, the structure of the metasurface is thinner, so that the pattern projector according to the embodiment of the invention can have a thinner structure.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic structural view of a pattern projector according to an embodiment of the invention.
FIG. 2 is a perspective view of the metasurface in FIG. 1.
FIG. 3 shows front views of the laser source and the metasurface in FIG. 1 and a front view of a pattern projected by the pattern projector on a projected surface.
FIG. 4 shows front views of the laser source and the metasurface of a pattern projector according to another embodiment of the invention and a front view of a pattern projected by the pattern projector on a projected surface.
FIG. 5A shows front views of the laser source and the metasurface of a pattern projector according to another embodiment of the invention and a front view of a pattern projected by the pattern projector on a projected surface when both of the emitting sections of the laser source is turned on.
FIG. 5B shows front views of the laser source and the metasurface of a pattern projector according to another embodiment of the invention and a front view of a pattern projected by the pattern projector on a projected surface when one of the emitting sections of the laser source is turned on.
FIG. 5C shows front views of the laser source and the metasurface of a pattern projector according to another embodiment of the invention and a front view of a pattern projected by the pattern projector on a projected surface when the other one of the emitting sections of the laser source is turned on.
FIG. 6 shows front views of the laser source and the metasurface of a pattern projector according to another embodiment of the invention and a front view of a pattern projected by the pattern projector on a projected surface.

### DESCRIPTION OF THE EMBODIMENTS

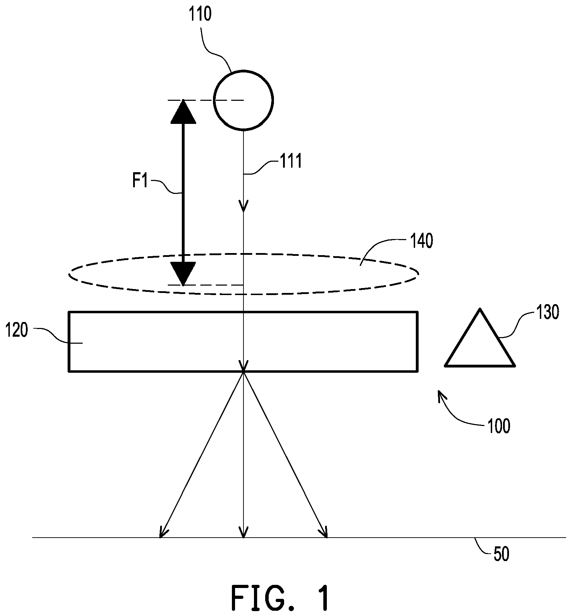

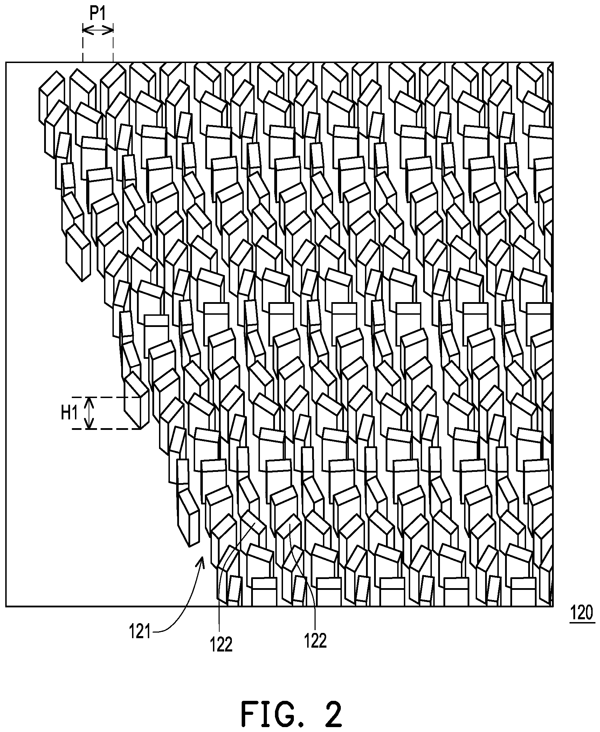

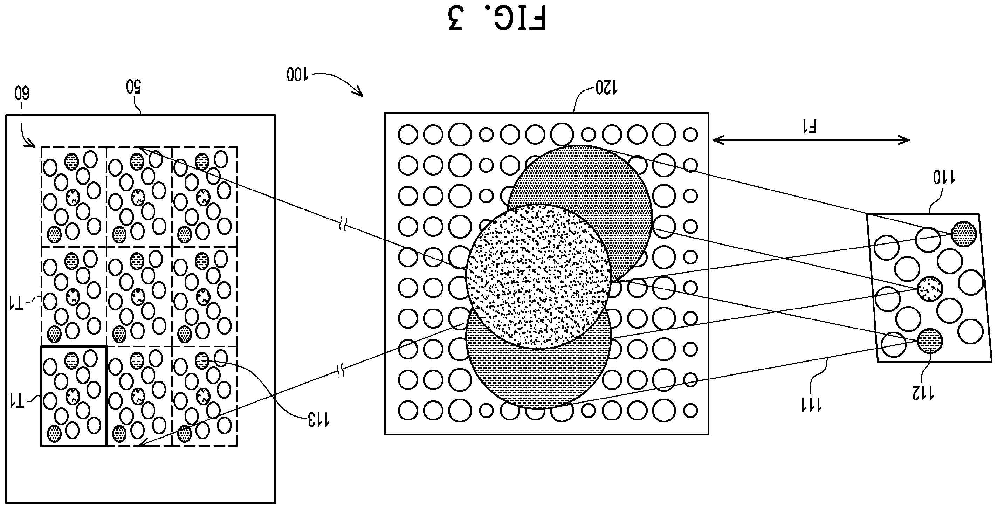

FIG. 1 is a schematic structural view of a pattern projector according to an embodiment of the invention, FIG. 2 is a perspective view of the metasurface in FIG. 1, and FIG. 3 shows front views of the laser source and the metasurface in FIG. 1 and a front view of a pattern projected by the pattern projector on a projected surface. Referring to FIG. 1, FIG. 2, and FIG. 3, the pattern projector 100 in this embodiment includes a laser source 110, a metasurface 120, and a light sensor 130. The laser source 110 is configured to emit a laser beam 111. In this embodiment, the laser source 110 is a vertical-cavity surface-emitting laser (VCSEL), which has a plurality of point laser sources 112. In another embodiment, the laser source 110 may be a photonic crystal surface-emitting laser (PCSEL).

The metasurface 120 is disposed on a path of the laser beam 111 and configured to diffract the laser beam 111 onto a projected surface 50, so as to form a pattern 60 on the projected surface 50, as shown in FIG. 3. The light sensor 130 is disposed beside the metasurface 120 and configured to sense the pattern 60.

In this embodiment, the metasurface 120 includes a plurality of nanopillars 122 standing up on and distributed over a surface 121 of a substrate to form a single layer of nanopillars 122. The surface 121 is, for example, a plane. In this embodiment, the nanopillars 122 are rectangular pillars. However, in other embodiments, the nanopillars 122 may be circular pillars, elliptic pillars, polygonal pillars, or pillars with any other shape. In this embodiment, orientations of the nanopillars 122 parallel to the surface 121 may be designed to be a certain orientation distribution, so that a required pattern 60 may be formed by the nanopillars 122 diffracting the laser beam 111. Moreover, the pitch P1 of the nanopillars 122 may also be designed. For example, the nanopillars 122 may be designed to have several pitches, so that a required pattern 60 may be formed by the nanopillars 122 diffracting the laser beam 111. In this embodiment, a height H1 of the nanopillars 122 (i.e. the height perpendicular to the surface 121) is less than 800 nanometers. Moreover, in this embodiment, the pitch P1 of the nanopillars 122 ranges from 300 nanometers to 800 nanometers.

In this embodiment, the pattern projector 100 may further include a lens 140 disposed on a path of the laser beam 111 and between the laser source 110 and the metasurface 120. In this embodiment, the laser source 110 is disposed on the effective focal length (EFL) F1 of the lens 140 and the metasurface 120. However, in other embodiments, the pattern projector 100 does not have the lens 140, and the laser source 110 may be disposed on the EFL F1 of the metasurface 120.

In this embodiment, the pattern 60 on the projected surface 50 includes a plurality of dots 113. That is to say, the pattern 60 in this embodiment is a dot pattern. In this embodiment, the metasurface 120 is configured to diffract the laser beam 111 to form a plurality of pattern tiles T1 arranged on the projected surface 50 without overlapping each other. In this embodiment, each of the pattern tiles T1 has a dot pattern corresponding to the pattern of the point laser sources 112 of the laser source 110. Moreover, in this embodiment, the pattern tiles T1 are continuously distributed to form the whole of the pattern 60.

In this embodiment, the laser source 110, the metasurface 120, and the light sensor 130 may form a structured light sensor or a time-of-flight sensor. In the case of a structured light sensor, the light sensor 130 may be a camera configured to photograph the pattern 60, and the metasurface 120 form a structured light. Besides, the projected surface 50 may be a plane, a curved surface, or a surface with any shape. For example, the projected surface 50 may be a human face.

In the pattern projector 100 in this embodiment, a metasurface 120 is disposed to form a pattern 60 on a projected surface 50. In this embodiment, a height H1 of the nanopillars 122 is less than 800 nanometers. Compared with a DOE combined with a lens having a thicker structure, the structure of the metasurface 120 is thinner, so that the pattern projector 100 in this embodiment may be thinner and have a thinner structure.

In another embodiment, the laser source 110 may be a high contrast grating VCSEL (HCG VCSEL), which can emit a laser beam 111 with a plurality of wavelengths. Therefore, the metasurface 120 may have multifunctions to generate different patterns when the wavelength of the laser beam 111 changes.

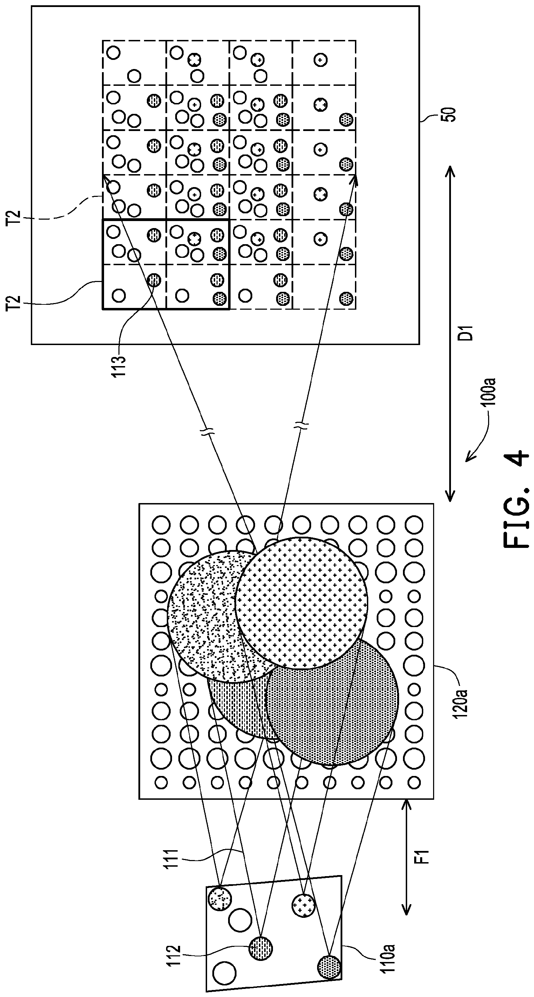

FIG. 4 shows front views of the laser source and the metasurface of a pattern projector according to another embodiment of the invention and a front view of a pattern projected by the pattern projector on a projected surface. Referring to FIG. 4, the pattern projector 100a in this embodiment is similar to the pattern projector 100 in FIG. 3, and the main difference therebetween is as follows. In this embodiment, the metasurface 120a is configured to diffract the laser beam 111 to form a plurality of pattern tiles T2 arranged on the projected surface 50, and adjacent pattern tiles T2 overlap each other. Since adjacent pattern tiles T2 overlap each other, the overlapping area of the pattern tiles T2 may have dense dots 113, and the non-overlapping area of the pattern tiles T2 may have sparse dots 113. As a result, dense dots on the central area may be obtained without increasing the point laser sources 112 of the laser source 110a.

In this embodiment, the size of the tile T2 is equal to D 1 * (the size of the laser source 110a)/F1, where F1 is the EFL of the optical system (e.g. including the lens 140 and the metasurface 120 or including only the metasurface 120 if there is no lens 140), and D1 is the distance from the metasurface 120a to the projected surface 50. In an embodiment, the size of the tile T2 is the long side length of the tile T2, and the size of the laser source 110a is the long side length of the laser source 1 10a, for example.

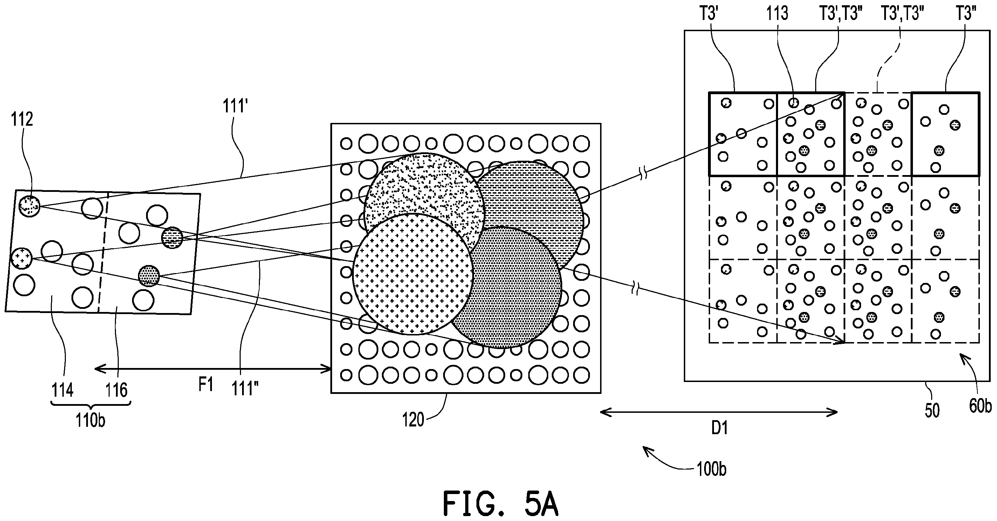

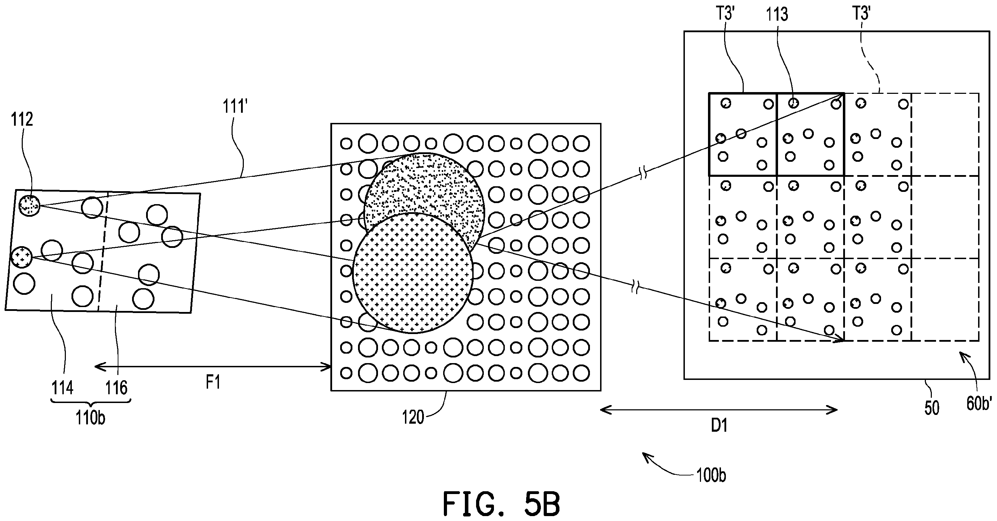

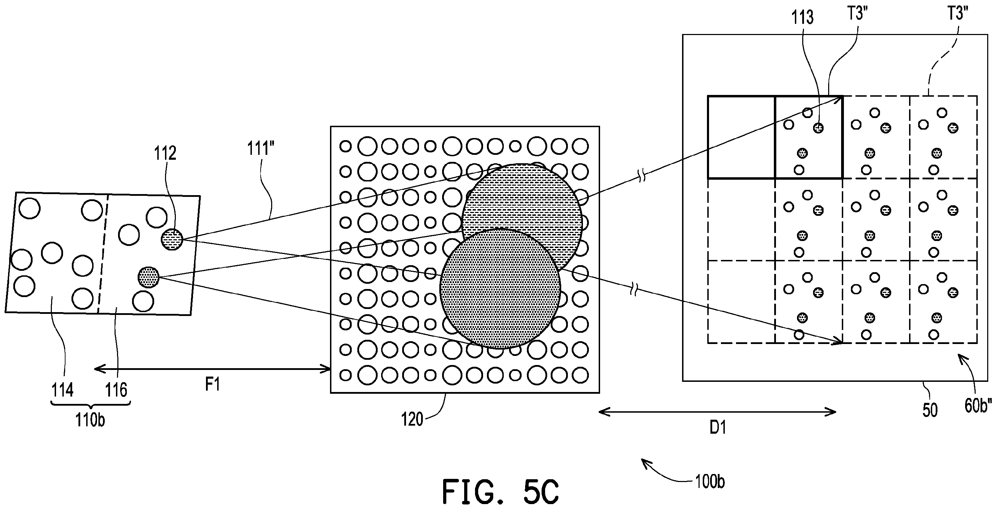

FIG. 5A shows front views of the laser source and the metasurface of a pattern projector according to another embodiment of the invention and a front view of a pattern projected by the pattern projector on a projected surface when both of the emitting sections of the laser source is turned on, FIG. 5B shows front views of the laser source and the metasurface of a pattern projector according to another embodiment of the invention and a front view of a pattern projected by the pattern projector on a projected surface when one of the emitting sections of the laser source is turned on, and FIG. 5C shows front views of the laser source and the metasurface of a pattern projector according to another embodiment of the invention and a front view of a pattern projected by the pattern projector on a projected surface when the other one of the emitting sections of the laser source is turned on. Referring to FIG. 5A, FIG. 5B, and FIG. 5C, the pattern projector 100b in this embodiment is similar to the pattern projector 100 in FIG. 3, and the main difference is as follows. In this embodiment, the laser source 110b includes a plurality of emitting sections (two emitting sections 114 and 116 are taken as an example in FIGs. 5A to 5C), the metasurface 120 is configured to diffract laser sub-beams 111' and 111" from the emitting sections 114 and 116 to from a plurality of sets of pattern tiles T3' and T3", and the sets of pattern tiles T3' and T3" overlap each other. Moreover, the emitting sections 114 and 116 are independently driven, so that the pattern 60b, 60b', 60b" on the projected surface 50 include at least one set of pattern tiles T3' and T3". For example, the set of pattern tiles T3' on the projected surface 50 is located at the left nine rectangles as shown in FIG. 5B, and the set of pattern tiles T3" on the projected surface 50 is located at the right rectangles as shown in FIG. 5C. When both of the emitting sections 114 and 116 are turned on, the set of pattern tiles T3' and the set of pattern tiles T3" overlap at the middle six rectangles on the projected surface 50 as shown in FIG. 5A. In FIG. 5B, the emitting section 114 is turned on and the emitting section 116 is turned off, and only the set of pattern tiles T3' is projected. In FIG. 5C, the emitting section 114 is turned off and the emitting section 116 is turned on, and only the set of pattern tiles T3" is projected. Therefore, a user may choose one of the patterns 60b, 60b', and 60b" to satisfy the real requirement.

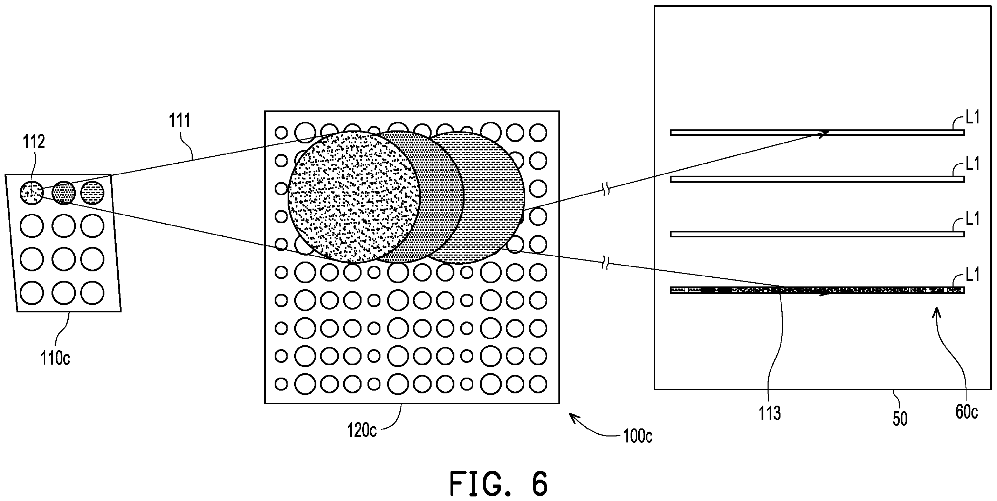

FIG. 6 shows front views of the laser source and the metasurface of a pattern projector according to another embodiment of the invention and a front view of a pattern projected by the pattern projector on a projected surface. Referring to FIG. 6, the pattern projector 100c in this embodiment is similar to the pattern projector 100 in FIG. 3, and the main difference therebetween is as follows. In this embodiment, the pattern 60c on the projected surface 50 includes a plurality of lines L1. The metasurface 120c in this embodiment diffract the laser beam 111 to form a plurality of dots 113 on the projected surface 50. Some of the dots connect together or overlap to form a line L1, and others of the dots connect together or overlap to form another line L1. As a result, a line pattern may be obtained.

In the pattern projector according to the embodiment of the invention, a metasurface is disposed to form a pattern on a projected surface. Compared with a DOE combined with a lens having a thicker structure, the structure of the metasurface is thinner, so that the pattern projector according to the embodiment of the invention can have a thinner structure.

## Claims

1. A pattern projector (100, 100a, 100b, 100c) comprising:
a laser source (110, 110a, 110b, 110c) configured to emit a laser beam (111);
a metasurface (120, 120a, 120c) disposed on a path of the laser beam (111) and configured to diffract the laser beam (111) onto a projected surface (50), so as to form a pattern on the projected surface (50); and
a light sensor (130) disposed beside the metasurface (120, 120a, 120c) and configured to sense the pattern.

2. The pattern projector (100) according to claim 1, wherein the metasurface (120) is configured to diffract the laser beam (111) to form a plurality of pattern tiles (T1) arranged on the projected surface (50) without overlapping each other.

3. The pattern projector (100a) according to claim 1, wherein the metasurface (120a) is configured to diffract the laser beam (111) to form a plurality of pattern tiles (T2) arranged on the projected surface (50), and adjacent pattern tiles (T2) overlap each other.

4. The pattern projector (100b) according to claim 1, wherein the laser source (110b) comprising a plurality of emitting sections (114, 116), the metasurface (120) is configured to diffract laser sub-beams (111', 111") from the emitting sections (114, 116) to from a plurality of sets of pattern tiles (T3', T3"), and the sets of pattern tiles (T3', T3") overlap each other.

5. The pattern projector (100b) according to claim 4, wherein the emitting sections (114, 116) are independently driven, so that the pattern on the projected surface (50) comprises at least one set of pattern tiles (T3', T3").

6. The pattern projector (100, 100a, 100b, 100c) according to claim 1, wherein the pattern on the projected surface (50) comprises a plurality of dots (113).

7. The pattern projector (100c) according to claim 1, wherein the pattern on the projected surface (50) comprises a plurality of lines (L1).

8. The pattern projector (100, 100a, 100b, 100c) according to claim 1, wherein the laser source (110, 110a, 110b, 110c), the metasurface (120, 120a, 120c), and the light sensor (130) form a structured light sensor or a time-of-flight sensor.

9. The pattern projector (100, 100a, 100b, 100c) according to claim 1, wherein the laser source (110, 110a, 110b, 110c) is a vertical-cavity surface-emitting laser or a photonic crystal surface-emitting laser.

10. The pattern projector (100, 100a, 100b, 100c) according to claim 1, the light sensor (130) is a camera.

11. The pattern projector (100, 100a, 100b, 100c) according to claim 1 further comprising a lens (140) disposed on a path of the laser beam (111) and between the laser source (110, 110a, 110b, 110c) and the metasurface (120, 120a, 120c).

12. The pattern projector (100, 100a, 100b, 100c) according to claim 1, wherein the metasurface (120, 120a, 120c) comprises a plurality of nanopillars (122) standing up on and distributed over a surface (121).

13. The pattern projector (100, 100a, 100b, 100c) according to claim 12, wherein a height (H1) of the nanopillars (122) is less than 800 nanometers.

14. The pattern projector (100, 100a, 100b, 100c) according to claim 12, wherein a pitch (P1) of the nanopillars (122) ranges from 300 nanometers to 800 nanometers.
